(19) Europäisches Patentamt
European Patent Office
Office européen des brevets

(11) **EP 3 543 678 A1**

(12) **EUROPEAN PATENT APPLICATION**

(43) Date of publication:
**25.09.2019 Bulletin 2019/39**

(51) Int Cl.:
*G01N 15/02* (2006.01)

(21) Application number: **18162819.9**

(22) Date of filing: **20.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AE Eindhoven (NL)**

(72) Inventors:
• ZHANG, Qiushi
  5656 AE Eindhoven (NL)
• CHEN, Shuang
  5656 AE Eindhoven (NL)
• SUIJVER, Jan Frederik
  5656 AE Eindhoven (NL)

(74) Representative: **de Haan, Poul Erik et al**
**Philips International B.V.**
**Philips Intellectual Property & Standards**
**High Tech Campus 5**
**5656 AE Eindhoven (NL)**

(54) **PARTICLE SENSOR AND METHOD**

(57)     A particle sensor is provided for sensing the number or mass concentration of particles within a particular particle size range, the particles having a particle size distribution. The sensor comprises a light source (14) for providing light which is scattered by the particles to generate scattered light; a light detector (16, 18) for detecting the scattered light to provide a light detector signal; and a controller (24) for analyzing the light detector signal to determine information relating to the particle size distribution. Based on that information relating to the particle size distribution, the controller selects a mode of operation of the particle sensor to sense the particles only within the particular size range.

FIG. 1

## Description

FIELD OF THE INVENTION

This invention relates to a method and apparatus for characterizing particles.

BACKGROUND OF THE INVENTION

Low cost particle sensors are widely used in home appliances and integrated sensor boxes for particulate matter (PM) related air quality measurement. The sensor captures the intensity of scattered light by airborne particles and converts a sensor photocurrent to particle number and/or mass concentration according to the factory calibration parameters.

Most low cost particle sensors are only able to report particle number and/or mass concentration over the entire factory set size range (e.g. <10 $\mu$m for $PM_{10}$). However, in some circumstances, it is of more importance to further understand size-resolved particle number/mass distribution within the whole size range (e.g. subranges 2.5 - 5 $\mu$m and 5 - 10 $\mu$m within the whole range of $PM_{10}$), especially for pollution pattern recognition and pollution sources determination. Unfortunately, almost no available low cost PM sensors can adjust the active size range dynamically, let alone provide a size-resolved particle distribution.

Airborne particles commonly have a significantly larger population of small particles (e.g. less than 1 $\mu$m) than large ones (e.g. 5-10 $\mu$m and pollen). As low cost particle sensors usually have a large incident light spot and minimal control over particle flow, they cannot guarantee that each particle traverses the measurement zone individually, and hence the scattering signal captured will consist of a background contributed by fine particle ensembles and distinguishable peaks contributed by individual large particles.

Therefore, most low cost PM sensors calibrate the measured scattered intensity against a standard calibrated reading to obtain the particle mass concentration present. However, these calibration parameters could potentially result in a deviation between the sensor reading and the true value if the actual particle size distribution varies from the calibration scenario. In addition, the spectral-averaged number/mass concentration cannot either provide size-resolved particle information for in-depth pollution pattern analysis.

Efforts have been made to provide particle sensors which measure the particle concentration within a specific size range (e.g. >20 $\mu$m for pollen sensing). Typically, a cascade impactor, particle size separator or virtual impactor is used to pre-separate particles physically (according to their aerodynamic diameters) prior to their measurement. However, particle separators are usually bulky, and require professional operation and careful maintenance for accurate particle size separation. In addition, such sensors require considerable extra hardware investment onto low cost particle sensors.

SUMMARY OF THE INVENTION

There is therefore still a need for a low cost particle sensor wherein, instead of separating the particles of different sizes physically in advance, the sensor, together with the mode adjusting electronics, measures all particles, and then separates them electronically, and outputs size resolved particle number or mass concentration.

The invention is as defined by the claims.

According to a first aspect of the invention, there is provided a particle sensor for sensing particles within a particular particle size range, comprising:

a light source for providing light which is scattered by the particles to generate scattered light;
a collimator coupled to the light source to focus the incident light into a detection region small enough for individual particle detection;
a light detector for detecting the scattered light to provide a light detector signal;
a controller, wherein the controller is adapted to analyze the light detector signal to determine information relating to the particle size distribution and based on that information to select a mode of operation of the particle sensor to sense the particles only within the particular size range.

The particle sensor determines information relating to the particle size distribution of the sample, and based on that information automatically selects operating conditions for the sensor which only detect particles within a particular size range, for example pollen mode (e.g. >10 $\mu$m) coarse mode (2.5-10 $\mu$m), fine mode (1-2.5 $\mu$m) or ultrafine mode (<1 um). The operating mode can be switched according to an embedded algorithm in the sensor. The sensor operation is thus automatically adapted to the pollutants which are present in the air being analyzed.

There is generally a size range whose particle concentration is of the most interest, such as $PM_{10}$ for thoracic dust, $PM_4$ for respirable dust and $PM_{2.5}$ for air quality monitoring. The sensor can thus operate automatically in the most desirable mode having regard to the current air quality conditions. The sensor will then work in the size range of the most interest with high responsivity (for example with no sensing time wasted by cycling through other unwanted modes).

The automatic mode selection is only one option, and the particle sensor may have other modes of operation. For example, the coarse, fine and ultrafine modes may be selected manually by a user, thereby overriding the automatic mode selection. There may also be a mode in which the user is able to select the upper and lower size range for the detection, thus providing a more user-adaptable detection mode.

There may be a further mode of operation where the sensor cycles through all modes and outputs a particle number concentration across the whole size spectrum. This may be considered to be a full size spectrum mode.

Because the particle sensor detects particles only within a particular size range in each individual mode of operation, the particles do not need to be pre-separated physically according to their size and therefore the particle sensor is of low cost and complexity. The hardware required is only that of a standard particle sensor, namely a light source and a light detector.

The term particle size refers to the longest dimension of the particles. In general, particles are approximately spherical, and the longest dimension can be considered to be the diameter of the sphere.

The particle sensor has different modes of operation, depending on the sizes of the particles to be measured. The particle sensor determines information relating to the particle size distribution, for example by measuring the size of the particles of part or most of the sample. When in the automatic detection mode, after determining the information, the controller selects operating conditions appropriate for the particular sample, for example by measuring the size of the particles within the size range which includes the majority of the particle in the sample. When in a manually selected detection mode, the particle sensor will detect particles in the preset size range or the user-defined size range.

The controller can select a mode of operation to sense the particles only within the particular size range by use of a light source which has an intensity that is variable. The controller then selects a mode of operation by varying the intensity. By using light of varying intensity, the intensity of the light scattered by the particles is also varied. If irradiated with the same intensity of light, larger particles scatter a larger amount of light than smaller particles, and therefore generate a larger light detector signal. Therefore, by varying the intensity of the light source, the light detector signal for particles having a size within particular limits can be tuned to be within particular thresholds set by the controller, and thereby only particles having those particular sizes are detected.

Alternatively, the controller can select a mode of operation to sense the particles only within the particular size range by use of a light source which is pulsed. The controller then selects the mode of operation by varying the duration of each pulse. Therefore, in a similar manner to varying the intensity of the light, by varying the duration of each pulse, the light detector signal for the particles having a size within particular limits can be tuned to be within particular thresholds set by the controller, and thereby only particles having those particular sizes are detected.

Another method by which the controller can select a mode of operation to sense the particles only within the particular size range is by applying variable threshold settings to the light detector signal. Therefore, again because the amount of scattered light increases with particle size, the signals from particles above and below certain sizes can be disregarded, the size of those particles being determined by the level of the threshold. Thus, in this way, the upper and lower size limits of a particular detection mode are for example obtained by adjusting the intensity and/or pulse width of laser pulses and/or the signal processing (for example a comparator threshold). These adjustments may be based on a set of factory predefined values or a set of user-defined values, in order to define an active size range with corresponding lower and upper size limits.

The controller may be adapted to select a mode of operation by selecting light source and/or light detector control settings (such as defined above) such that:

for a particle of maximum size within the particular size range, the light detector output has just reached a clipped saturated output; and

for a particle of minimum size within the particular size range, the light detector output has just exceeded a minimum sensing threshold.

The clipped saturated output increases the light detector resolution and sensitivity by making full use of the light detector operation range. The use of a unique laser intensity and laser pulse width within each mode means that the light detector can work in a full range within each mode because its full operation range is used to retrieve particle size. This increases the sensor sensitivity.

A light detector signal duration is correlated to a particle size and the number of light detector signals is correlated to a particle number count within the chosen size range. This mode of operation is for a particle size range with both a minimum particle size and a maximum particle size. This may apply to some of the modes of operation, but others may have only a minimum size (for the largest particles) or only a maximum size (for the smallest particles).

The controller may be adapted to determine information relating to the particle size distribution by cycling through a set of said modes of operation, each of which is for a respective particle size range, and these particle size ranges are consecutive with no gaps, and thus together define a single continuous range. This may be carried out initially for a short duration, and the remainder of the sensing function is devoted to the particular size range identified to be of primary interest.

In one embodiment, the light source is a laser. In particular, the light source is a pulsed laser. When the light source is a laser, the intensity of the laser is varied by altering the laser voltage.

The light detector is preferably remote, i.e. its hardware is outside the flow channel so that the detector itself does not provide any resistance to the flow.

The particle sensor is generally for sensing particles in air. One type of particle that can be detected is pollen.

The particle sensor can automatically adjust to parameters which are appropriate for the particular particles being detected, in particular by only counting the particles of size range that are dominant in the sample. In addition, the particle sensor may include a user interface for selecting the mode of operation of the particle sensor to sense the particles only within a particular size range as specified by the user. There may be only preset size ranges, or else the user maybe able to configure a size range. In this embodiment, rather than the sensor adjusting to measure particles of a particular size automatically, the user may instruct the sensor to measure particles of a size selected by the user.

Particular size ranges of interest can be selected from:

> \>10 μm;
> 2.5 μm-10 μm;
> 1 μm-2.5 μm;
> \<1 μm; and
> user-specified size range (e.g. 4 - 8 μm).

In another aspect, the invention provides a particle sensing method for sensing the number of particles within a particular particle size range, the particles having a particle size distribution, comprising:

> irradiating the particles with a light source for providing light which is scattered by the particles to generate scattered light;
> detecting the scattered light with a light detector (e.g. photodiode) to provide a light detector signal;
> analyzing the light detector signal to determine information relating to the particle size distribution and based on that information selecting an optimal mode of operation of the particle sensor to sense the particles only within the particular size range.

This method automatically adapts a sensor operation to provide optimum sensing for the particular pollutants that are present in a sample being analyzed.

Selecting an optimal mode of operation may comprise one or more of:

> selecting a light source intensity;
> selecting a light source pulse duration; and
> selecting a threshold setting for the light detector signal analysis.

Thus, the light source or the light detector control is adapted to a particular size range.

The mode of operation maybe chosen by selecting light source and/or light detector control settings such that:

> for a particle of maximum size within the particular size range, the light detector output has just reached a clipped saturated output; and
for a particle of minimum size within the particular size range, the light detector output has just exceeded a minimum sensing threshold.

This means that the light detector is fully responsive to particles in the particular size range.

Determining information relating to the particle size distribution maybe obtained by cycling through a set of said modes of operation, each of which is for a respective particular size range, with the size ranges together forming a continuous range.

In one embodiment of the method, a user inputs parameters to select the mode of operation of the particle sensor, and therefore to measure particles of a size selected by the user. This functions as an override to an automated operation of the sensor.

BRIEF DESCRIPTION OF THE DRAWINGS

Examples of the invention will now be described in detail with reference to the accompanying drawings, in which:

> Fig. 1 shows particle sensor according to the invention;
> Fig. 2 shows how the variations of the properties of the light source and threshold setting affect the pulse width modulation (PWM) output;
> Fig. 3 shows how the different sized particles provide a different pulse width modulation (PWM) output;
> Fig. 4 shows a plot of pulse width versus particle size in a coarse sensing mode; and
> Fig. 5 shows a flow chart demonstrating a particular use of the system of the invention.

DETAILED DESCRIPTION OF THE EMBODIMENTS

This invention provides a particle sensor for sensing the number or mass concentration of particles within a particular particle size range in a sample of particles having a particular particle size distribution.

The particle sensor comprises a light source for providing light which is scattered by the particles to generate scattered light and a light detector for detecting the scattered light to provide a light detector signal. The particle sensor has a controller for analyzing the light detector signal to determine information relating to the particle size distribution and based on that information selecting a mode of operation of the particle sensor to sense the particles only within the particular size range.

Particle sensors which physically pre-separate particles in advance of sensing, thereby measuring only particles within a particular size range, are known. This invention is based on a particle sensor which has a controller to analyze the light detector signal generated by the light scattered by the particles, which allows the signal provided only by particles within a particular size range to be analyzed, and therefore provides a method of detecting particles within that range without first separating those particles from particles having other sizes.

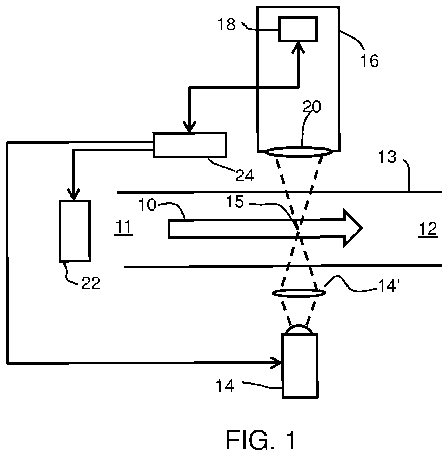

Fig. 1 shows an example of a particle sensor according to the invention. There is a fluid (gas) flow 10 from an inlet 11 of a flow channel 13 to an outlet 12 of the flow channel 13. The flow channel 13 is formed by a conduit which has a length between the inlet 11 and outlet 12. The particles pass through a region which is irradiated by a light source 14 for providing light which is scattered by the particles to generate scattered light. The scattered light is detected by a light detector 16. A collimator 14' focuses the incident light from the light source 14 into a small measurement zone 15, in which only one particle is present at any moment to realize individual particle detection.

A flow control device 22, shown schematically in Fig. 1, is used for inducing flow through the particle sensor. It may comprise a fan, or a heater to create a convective heat flow. In a system using heating, the resulting buoyancy causes air to flow towards the top of the detector, carrying the particles through the flow channel. In such a case, the flow channel may be vertically upwards.

The light source is to one side of the flow channel 13 and the light detector 16 is on the opposite side. An alternative design may make use of the reflection of light. The light source maybe a laser diode (e.g. pulsed laser) or an infrared LED.

The particles are irradiated in the measurement zone 15 at transparent portions of the conduit that defines the flow channel 13, which allow the light to pass through the conduit. The conduit may be part of a housing which is placed on a printed circuit board with the electronics to convert the signal due to the particles into a count. Leakage of incident light directly towards the photodiode light detector, which would give a background signal, is minimized.

The light detector 16 comprises a photodiode sensor 18 and a focusing lens 20 at which scattered light is detected thereby generating a light detector signal.

The controller 24 controls the operation of the flow control device and light source.

In addition, the controller 24 is for analyzing the light detector signal to determine information relating to the particle size distribution and based on that information selecting a mode of operation of the particle sensor to sense the particles only within a particular size range.

Most low cost sensors include signal processing electronics which contains factory settings and calibration parameters. In addition, the sensor may have ports for user inputs to override the default settings. The mode of operation may be varied for example by varying the intensity of the light source, varying the duration of a pulsed light source, or varying the threshold setting applied to the light detector signal.

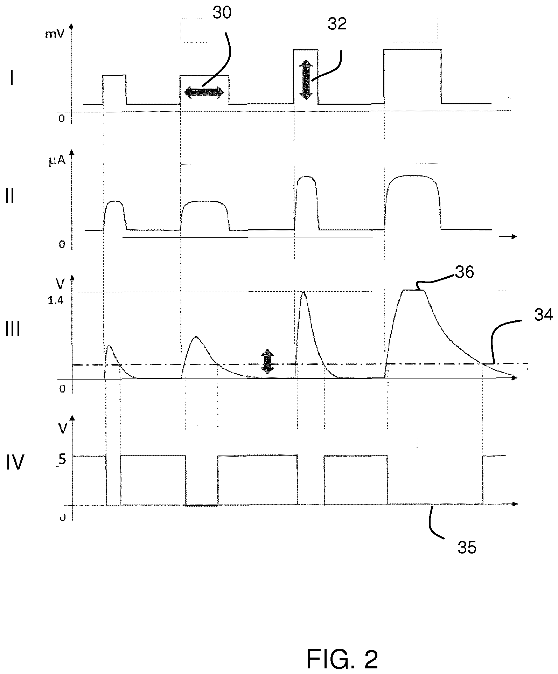

Fig. 2 shows how varying these parameters alters the signal output for a particular particle size in an embodiment in which the light source is a pulsed laser and the light detector is a photodiode.

Signals I-IV represent respectively the laser diode driving voltage, the photocurrent detected by the photodiode, the signal after amplification and filtering, and the pulse width modulation (PWM) output.

The laser diode emits laser pulses (Signal I) having a particular duration or pulse width 30 (for example around 20-40 ms) and intensity 32 (controlled by the laser driving voltage) that illuminate the particles. If a particle is present during a pulse, the photodiode will detect the light scattered by that particle and converts its intensity to a photocurrent (Signal II, $\mu A$). This analogue scattered light detector signal can be processed to give a digital output. The photocurrent is filtered and amplified by the controller's signal processing electronics to provide Signal III. This signal is converted to a digital PWM output by a comparator threshold 34 to give the PWM Signal IV. This is a Boolean signal with either high or low voltage. A low voltage pulse corresponds to the presence of a particle, and the width of the low voltage pulse is calibrated to the particle size.

As shown, the PWM signal is low when the amplified signal (Signal III) exceeds the threshold 34. The threshold 34 thus implements a band pass filtering function. The threshold is for example implemented as a threshold voltage applied to a comparator which controls the particle size sensitivity of the sensor system. By adjusting the threshold, particle size bins may be defined to enable a particle size distribution information to be obtained. The length of a low voltage pulse in the PWM signal (Signal IV) is equal to the time during which Signal III exceeds the comparator threshold.

The low voltage pulse length 35 of the PWM output is determined by the previous values as follows:

> (i) The pulse width 35 of a PWM output is determined by the time period for which the height of Signal III is greater than the comparator threshold 34;
> (ii) The height of Signal III is determined by the height and width of Signal II
> (iii) The width of Signal II is determined by the width 30 of Signal I; and
> (iv) The height of Signal II is determined by the height 32 of Signal I and the size of the particle in the measurement zone.

Thus when measuring particles with fixed size, the PWM output will be influenced by the width 30 of Signal I, i.e. the laser pulse duration, the height 32 of the Signal I, i.e. the intensity of the laser output; and the threshold 34 of Signal III, i.e. the threshold setting applied to the light detector signal. Thus, there are three control variables which determine the size range for which the sensor operation is tuned.

In order to make a measurement of particle size distribution, the controller alternates between the different size ranges by operating with different sets of values for the three control variables defined above. Within the different size ranges, different mass concentrations are obtained or different particle number concentrations.

The light detector for example requires 20 seconds to obtain a stable particle concentration result in each mode. The sweep of all modes, in order to obtain a particle size distribution, is for example repeated every hour to obtain a renewed size distribution measurement and then determine whether the "optimal" mode will remain the same or will need to be switched. The sweeping of three particle size modes (coarse, fine and ultrafine) as described above may thus last one minute, and this may be repeated a number of times to ensure sufficient data collection. For example, there maybe 5 to 10 repetitions.

In this way, the particle sensor makes a measurement of the particle size distribution. Then, having determined information relating to particle size, the controller selects a mode of operation of the particle sensor to sense the particles only within a particular size range by varying the three control variables, thereby sensing the number of particles only within a particular particle size range, without pre-separation of the particles.

Thus, for example, after analyzing the light detector signal to determine that the majority of particles are within 2.5-10 $\mu$m, the controller can select a mode of operation to sense only the particles within this particular size range.

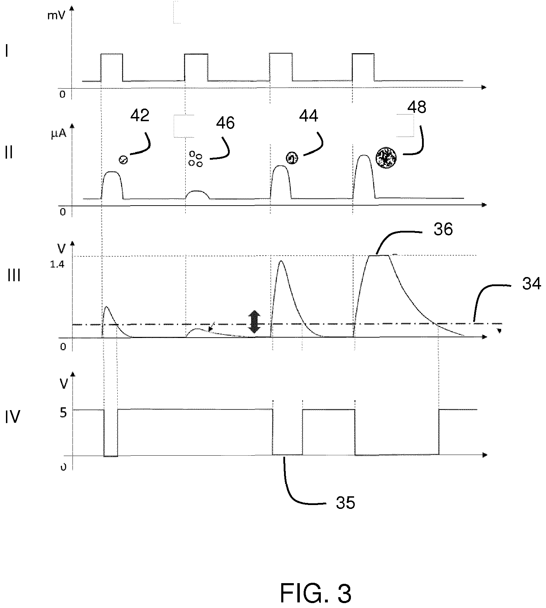

This is achieved by making Signal III generated by the largest particle in the size range (i.e. 10 $\mu$m) reach the maximum value of Signal III (i.e. 1.4 V in this example) that does not trigger clipping (clipping being shown as 36 in Fig. 3), and making Signal III generated by the smallest particle in the size range (i.e. 2.5 $\mu$m) just exceed the comparator threshold (i.e. 0.3 V in this example).

Thus, for a particle size range, for a particle of maximum size within the particular size range, the light detector output has just reached a clipped saturated output whereas for a particle of minimum size within the particular size range, the light detector output has just exceeded a minimum sensing threshold.

The duration and intensity of the laser pulse (Signal I) correlate with the height of Signal III, and so variation of these parameters determine the upper limit of the active size range (i.e. 10 $\mu$m), thereby ensuring that the largest particle in this range does not trigger clipping of Signal III. The comparator threshold is determined so that all particles larger than the lower size limit (i.e. $d_{p\text{-}min}$=2.5 $\mu$m) are recorded in the PWM output (Signal IV).

Thus, the particle sensor therefore adjusts to a mode of operation to sense the particles only within the particular size range.

In particular, the controller can select a mode of operation to sense only the particles within the following particular five size ranges:

> pollen mode (>10 $\mu$m or user-defined cut-off size);
> general mode (user-defined active size range);
> coarse mode (2.5 $\mu$m-10 $\mu$m);
> fine mode (1 $\mu$m-2.5 $\mu$m);
> ultrafine mode (<1 $\mu$m)

Fig. 3 shows the particle sensor in operating in a coarse mode (PM$_{2.5\text{-}10}$). Different laser and/or threshold settings may be used for other modes. As explained further below, the same laser pulse used in the coarse mode (Signal I) may also be used for pollen detection (>10 $\mu$m) but the way the light detector signal is interpreted differs depending on whether the coarse mode is being used or the pollen sensing mode.

In the coarse mode, the width and height of the laser pulse (Signal I) are set to make upper size limit to 10 $\mu$m, and the comparator threshold is set to the lower size limit of 2.5 $\mu$m. With these settings, the sensor only reports particles in the PWM output with sizes within this range (Signal IV). For the coarse mode, information for particles below 2.5 $\mu$m is not needed.

The width of each low voltage pulse 35 in the PWM output is related to the particle size. As shown in Fig. 3, a larger particle 44 (e.g. 8 $\mu$m) will induce a wider low voltage pulse in Signal IV compared to a smaller particle 42 (e.g. 3 $\mu$m). By analyzing the width of each low voltage pulse, the sensor can further differentiate particle size and yield a size resolved particle number distribution spectrum within the active size range of the said mode.

The three control variables mentioned above can further be adjusted to define additional operation modes with user specific upper and lower size limits. For instance, with the lower size limit set as 1 $\mu$m and the upper limit as 2.5 $\mu$m, the sensor defines a fine mode where number/mass concentration and size resolved number distribution of particles having size from 1 $\mu$m to 2.5$\mu$m will be obtained.

In addition to particle number or mass concentration within the coarse size range, the particle sensor can also determine particle mass concentration below the lower size limit (<2.5 $\mu$m or <1 $\mu$m) using the background signal (Signal III below the threshold level). As small particles 46 are dominant in population across the whole size spectrum and usually appear in clusters in the measurement zone of the particle sensor (instead of individually as larger particles), the sensor is not able to tell particle number concentration but only mass concentration from the aggregated scattering signal by particle ensembles. In course mode, the threshold 34 is set to exclude these small particles.

The mass concentration of particles <2.5 $\mu$m (or <1 $\mu$m) can be determined by using the background in Signal III when no particle of 2.5 $\mu$m-10 $\mu$m (or no particle of 1 to 2.5 $\mu$m) is present in the measurement zone. The background signal arises from scattering by clusters of fine particles, but can also be contaminated by stray light from undesired scattering in the sensor chamber or even electronics noise. If stray light and electronic noise are suppressed to an optimized level, e.g.

coating the sensor optics chamber with light absorbing material, or providing additional filtering stage in the signal processing electronics, the sensor will be able to interpret mass concentration of particles <2.5 μm or <1 μm from the background signal.

An operation mode with a smaller upper size limit requires a laser pulse with greater duration 30 and increased intensity 32 (Signal I), and an operation mode with a smaller lower size limit requires a lower threshold 34 (Signal III). Specific values for the three parameters appropriate for particular size limits can be provided to users in a look-up table from factory calibrations.

There are thus different size modes, such as a coarse mode, a fine mode and an ultrafine mode.

Some of these size modes have upper and lower size limits. The lowest size mode has only an upper limit (<1 μm).

No threshold value is required for the lowest size mode. In most instances, the light detector sees more than one ultrafine particle at a time, so the particle sensor uses signal III to directly interpret $PM_1$ total mass concentration with no particle number count via the PWM output at signal IV.

In contrast to these modes, for which particles which cause clipping are excluded from detection, the pollen mode counts a clipping event 36 in Signal III as the presence of pollen 48 (i.e. particles >10 μm, defined as the cut-off size) or another large particle type. This clipping event is detected as a saturated light detector output.

The output signal (e.g. Signal III) is for example digitized and analyzed in software to detect the clipping events.

Fig. 3 shows one such clipping event 36 in Signal III when the sensor records the presence of one pollen particle. The final output in pollen mode is the particle (pollen) count.

However, when the signal is clipped, the low voltage width in the PWM output (Signal IV) is no longer sensitive to particle size. Thus pollen mode cannot report an accurate size resolved pollen distribution spectrum, but only a pollen number concentration instead.

The pulse width of the PWM signal after the comparator (Signal IV) is most responsive to particle size when Signal III lies below clipping level. Above the clipping level, a large increase in particle size will only result in a minor increase in pulse width of Signal IV, so that size resolution is not accurate but the number count is valid.

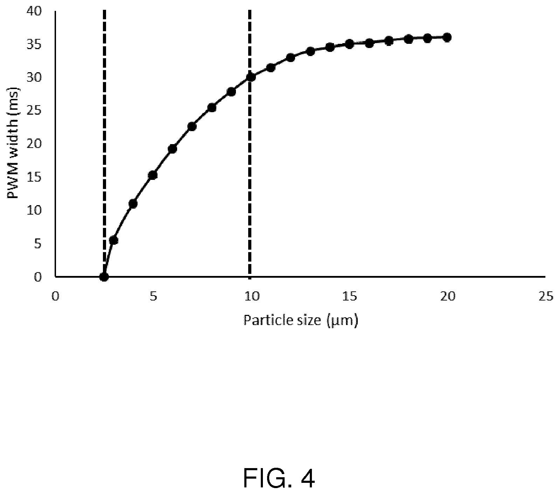

This issue is shown in Fig. 4 which plots the pulse width versus the particle size when in the coarse mode. The upper size cutoff is at 10μm and the lower boundary is at 2.5μm. It can be seen that after clipping, the pulse width is no longer highly sensitive to particle size.

The cut-off size of pollen mode is a lower size limit, only above which particles will be recorded. The cut-off limit for the pollen mode is adjusted by modifying the intensity of the laser and the duration of the laser pulse such that only particles of the size of pollen cause clipping. If the lower size limit for the pollen mode is the same as the upper size limit for the coarse mode, the same laser pulse may be used, as mentioned above. However, with a different laser duration and intensity, the sensor will record the presence of pollen with a different cut-off size such as 20 μm (i.e. particles > 20 μm).

As mentioned above, the pollen mode detects the presence of all particles above the cut-off size but cannot reliably distinguish particle size. Thus, an error maybe introduced in the reported pollen number count by an unwanted large particle (e.g. sand). A sensible choice of cut-off size in specific sensing scenarios can minimize this adverse effect.

The number of pollen detected by the sensor during a specific interval (for example 2 minutes) will satisfy a Poisson distribution:

$$P(n \ pollens \ in \ interval) = \frac{\lambda^n e^{-\lambda}}{n!}$$

where:

λ is the average pollen count during the interval
n takes on values 1, 2, 3
λ is calculated from the sensor measurement and can be used to estimate the probability of inhaling a certain number of pollen within a certain breath time or volume (e.g. the probability of a person inhaling 5 and 10 pollens per 2 minutes of normal breathe is 0.453 and 0.132 respectively). This measurement may be used to provide evidence for allergy severity analysis and for providing a pollen alert to a user. The sensor may have an output to provide a user alert based on the pollen reading.

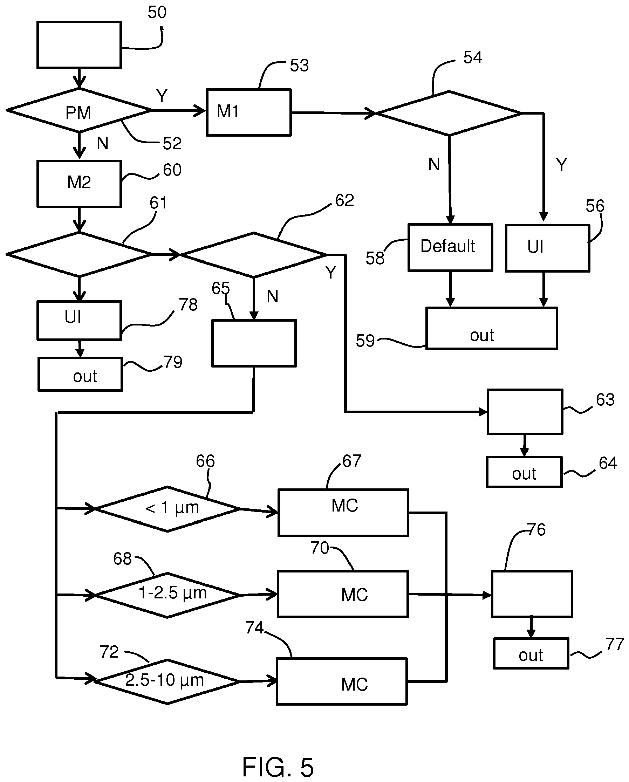

Fig. 5 shows a flow chart describing a possible use of the system and method.

In step 50 the sensor is started.

In step 52, the user selects whether the machine should operate in pollen mode ("PM"). Thus, in this example, the pollen mode is selected manually by the user whereas the method is able to automatically select between different size modes.

If yes, the sensor operates in a first mode (M1) in step 53, wherein the sensor only detects particles over a certain size i.e. which are pollen or mold spores. Smaller particles are neglected.

In step 54, the user may input a lower cut-off size for the pollen mode. For example, the user can instruct the sensor to detect only particles above 20 μm. This user input is provided in step 56. Alternatively, the sensor can operate in its default pollen mode and measure particles above a default cut-off size e.g. > 10 μm as set in step 58. The detector then provides an output in the form of a number of pollen particles (pollen count "PC") and pollen concentration in step 59.

Alternatively, the user can instruct the sensor not to operate in pollen mode, and indeed in the absence of user input the normal particle mode is selected. This is a second mode (M2) which is selected in step 60.

In that case, in step 61 the user can input a particle size range to be measured,

In the absence of user input in step 61, there is the option in step 62 of the user selecting a fixed mode (fine, ultrafine, coarse or full scanning mode). If a specific mode is selected, the particle sensing takes place and the results are output in step 64, for example as a histogram of size bins (e.g. 5) within the specific size range.

In the coarse mode and fine mode, the particle sensor outputs a particle number and mass concentration based on signal IV. In the ultrafine mode, the particle sensor outputs the particle mass concentration based on signal III. This is because it is difficult for the sensor to see ultrafine particles individually and thereby retrieve a particle count.

It is possible to provide an additional flow control mechanism to make individual particle sensing in the ultrafine mode possible. The particle sensor would then also be able to output a particle number concentration in the ultrafine mode but this would add cost to the particle sensor.

In the full scanning mode, the particle sensor cycles continuously through all of the three pre-set modes and outputs a size resolved particle number concentration across the whole size spectrum

In the absence of a selected individual mode, the sensor enters a self-learning mode 65. In this case, the sensor operates in an ultrafine mode (<1 $\mu$m), a fine mode (1 $\mu$m-2.5 $\mu$m) and a coarse mode (2.5 $\mu$m-10 $\mu$m), consecutively for a set period of time. After operating in each mode, the sensor determine which size range includes the largest mass concentration of particles, and operates in that mode.

The ultrafine mode is operated in step 66 followed by a mass concentration measurement in step 67. The fine mode is operated in step 68 followed by a number count and mass concentration measurement in step 70. The coarse mode is operated in step 72 followed by a number count and mass concentration measurement in step 74.

The sensor then determines which mode is appropriate based on which size range is dominant for a particular sample, in step 76. The sensor then chooses that mode as the optimal operation mode, and measures particles within that size range to provide a mass concentration or indeed a size resolved particle distribution within the range. The results are output in step 77, for example as a histogram of particle count for a set of size bins within the specific size range, and an overall mass concentration for that full size range. Of course, it may be that only particle count information is needed or that only a mass concentration is needed. The particle size distribution is obtained based on the analysis of the widths of the low pulses in Signal IV.

Referring back to step 61, if there is user input, a size range is input in step 78 and the sensor configures its operation to that mode and measures particles within that size range to provide a mass concentration or indeed a size resolved particle distribution within the range. The results are output in step 79.

In the fine mode, coarse mode, and user-defined mode, a particle number count is output with respect to size (derived based on the number and width of low voltage pulses in Signal IV). The particle number count may for example be illustrated as a particle size distribution in a histogram with a set of size bins within the entire size range of each mode. There may for example be 3 to 8 size bins, for example 5 size bins within the size range of each mode.

The particle number count can be converted to a mass concentration after assuming a representative particle density.

The controller can include seasonal, geographical, and weather forecast information. For example, if the seasonal information denotes spring i.e. the pollination season and the geographical information denotes Japan, the sensor will switch its primary mode to pollen mode. Alternatively, if the seasonal information denotes summer i.e. high temperature and humidity and the geographical information denotes Los Angeles or Shanghai, the sensor will switch the primary mode to fine mode and thereby measure secondary aerosol particles resulting from photochemical reactions.

The additional information may be obtained locally or from a remote data source such as over the Internet.

In applications where the operation of the sensor needs to be highly automated (e.g. in a sensor box, air purifier, vacuum cleaner, etc.), the request for user input values can be omitted so the sensor operation is determined by the default settings or be realized by buttons (e.g. button instructing sensor to work in pollen mode).

In addition to single mode operation, the sensor can also work in multiple modes alternately. For example, the sensor may operate with five cycles in the fine mode, five cycles in the coarse mode, five cycles in the pollen mode, five cycles in the fine mode, five cycles in the coarse mode, five cycles in the pollen mode and so on. The alteration among multiple operation modes enables the sensor to perform high-resolution particle sensing over broader active size ranges.

Particular applications of the particle sensor and method include particle sensing, for obtaining the number or mass concentration in one dominant size range or in multiple size ranges, or pollen sensing: to provide a pollen alert or an indication of likely pollen allergy severity. The sensor may also be used for mold spore or other biological airborne particle sensing. The sensor may be used in a sensor box to determine a wide range of airborne particle concentrations with high resolution; and in air purifying for filtration mode selection (for example fine particle filtration, coarse particle filtration, pollen filtration).

In the example above, the pollen mode is selected manually by the user whereas the method is able to automatically select between three different size modes by cycling through those three modes to provide an initial size distribution determination. In other examples, the pollen mode may also be an automatically selected mode of operation based on the detection of pollen as the dominant airborne particle. In this case, the self learning mode operates the coarse mode in both an LPO% mode and in a clipping count mode.

The example above has three different size modes. There may of course be a different number of size ranges in addition to the pollen mode. The pollen mode is a mode which detects particles with a minimum size, and may thus be used for detecting any type of particle above a minimum size. Thus, this mode is not restricted to the detection of pollen.

As discussed above, embodiments make use of a controller. The controller can be implemented in numerous ways, with software and/or hardware, to perform the various functions required. A processor is one example of a controller which employs one or more microprocessors that maybe programmed using software (e.g., microcode) to perform the required functions. A controller may however be implemented with or without employing a processor, and also maybe implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor or controller.

As explained above, one concept of the invention is to provide automatic mode selection based on a particle size distribution analysis. Another concept of the invention is to provide selectable upper and lower particle size limits, by adapting the light source intensity and pulse width.

In this aspect, there is provided a particle sensor for sensing particles within a particular particle size range, comprising:

a light source (14), collimated by collimator, for providing light which is scattered by the particles to generate scattered light;
a light detector (16, 18) for detecting the scattered light to provide a light detector signal; and
a controller (24),
wherein the light source provides light pulses of controllable pulse duration and intensity, wherein the controller is adapted to select the pulse duration and intensity thereby to define a particular size range over which particles are detected, having a non-zero lower size limit and an upper size limit.

Preferably, the light detector control settings are also adjustable, in particular so that the detection thresholds may be set.

In this aspect, a mode of operation is defined by selecting light source and/or light detector control settings such that:

for a particle of maximum size within the particular size range, the light detector output has just reached a clipped saturated output; and
for a particle of minimum size within the particular size range, the light detector output has just exceeded a set minimum sensing threshold.

Preferably, the sensor has a user input for enabling user selection of the lower size limit and the upper size limit.

Preferably, the sensor has a user input for enabling user selection of a set of predefined size ranges, each having a pre-set lower size limit and a pre-set upper size limit.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A particle sensor for sensing particles within a particular particle size range, comprising:

a light source (14), collimated by collimator, for providing light which is scattered by the particles to generate scattered light;

a light detector (16, 18) for detecting the scattered light to provide a light detector signal; and
a controller (24),
wherein the controller is adapted to analyze the light detector signal to determine information relating to the particle size distribution and based on that information to select a mode of operation of the particle sensor to sense the particles only within the particular size range.

2. A particle sensor according to claim 1, wherein the light source has an intensity that is variable and the controller is for selecting a mode of operation by varying the intensity.

3. A particle sensor as claimed in claim 1 or 2, wherein the light source is pulsed to provide pulses of light having a particular duration and the controller is for selecting a mode of operation by varying the pulse duration.

4. A particle sensor as claimed in any one of claims 1 to 3, wherein the controller is for selecting a mode of operation by applying a threshold setting to the light detector signal.

5. A particle sensor as claimed in any one of claims 1 to 4, wherein the controller is adapted to select a mode of operation by selecting light source and/or light detector control settings such that:

for a particle of maximum size within the particular size range, the light detector output has just reached a clipped saturated output; and
for a particle of minimum size within the particular size range, the light detector output has just exceeded a set minimum sensing threshold.

6. A particle sensor as claimed in any one of claims 1 to 5, wherein the controller is adapted to determine information relating to the particle size distribution by cycling through a set of said modes of operation, each of which is for a respective particle size range and which together form a continuous size range.

7. A particle sensor as claimed in any one of claims 1 to 6, wherein the light source is a laser and the light detector comprises a photodiode.

8. A particle sensor as claimed in any one of claims 1 to 7, wherein the sensor is for sensing particles in air.

9. A particle sensor as claimed in any one of claims 1 to 8, wherein the sensor is for sensing particles which are pollen.

10. A particle sensor according to any one of claims 1 to 9, wherein the sensor comprises a user interface for selecting manually the mode of operation of the particle sensor to sense the particles only within the particular size range.

11. A particle sensor according to any one of claims 1 to 10, wherein the size range is selected from:

>10 $\mu$m;
2.5 $\mu$m-10 $\mu$m;
1 $\mu$m-2.5 $\mu$m;
<1 $\mu$m; and
a user-specified size range.

12. A particle sensing method for sensing the number or mass of particles within a particular particle size range, the particles having a particle size distribution, comprising:

irradiating the particles with a light source (14), collimated by a collimator, for providing light which is scattered by the particles to generate scattered light;
detecting the scattered light with a light detector (16, 18) to provide a light detector signal; and
analyzing the light detector signal to determine information relating to the particle size distribution and based on that information selecting an optimal mode of operation of the particle sensor to sense the particles only within the particular size range.

13. A method according to claim 12, wherein selecting an optimal mode of operation comprises one or more of:

selecting a light source intensity;
selecting a light source pulse duration; and
selecting a threshold setting for the light detector signal analysis.

14. A method according to claim 12 or 13, comprising selecting a mode of operation by selecting light source and/or light detector control settings such that:

for a particle of maximum size within the particular size range, the light detector output has just reached a clipped saturated output; and
for a particle of minimum size within the particular size range, the light detector output has just exceeded a minimum sensing threshold.

15. A method according to any one of claims 12 to 14 comprising determining information relating to the particle size distribution by cycling through a set of said modes of operation, each of which is for a respective particular size range and which together form a continuous size range.

FIG. 1

FIG. 2

FIG. 3

FIG. 4

FIG. 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/165225 A1 (TRAINER MICHAEL [US]) 19 July 2007 (2007-07-19) | 1,2,4-15 | INV. G01N15/02 |
| Y | * paragraph [0176] * <br> * paragraph [0208] - paragraph [0215] * <br> * figures 41, 49 * <br> ----- | 3 | |
| Y | US 2010/194574 A1 (MONK DAVID JAMES [US] ET AL) 5 August 2010 (2010-08-05) <br> * paragraph [0024] - paragraph [0026] * <br> * paragraph [0035] - paragraph [0044] * <br> * figures 5-7 * <br> ----- | 3 | |
| A | JP 3 282458 B2 (HITACHI LTD) 13 May 2002 (2002-05-13) <br> * the whole document * <br> ----- | 1-15 | |

**TECHNICAL FIELDS SEARCHED (IPC)**

G01N

The present search report has been drawn up for all claims

| Place of search | Date of completion of the search | Examiner |
|---|---|---|
| The Hague | 14 September 2018 | Liefrink, Feike |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 18 16 2819

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2018

| Patent document cited in search report | | | Publication date | Patent family member(s) | | | Publication date |
|---|---|---|---|---|---|---|---|
| US 2007165225 | A1 | | 19-07-2007 | GB | 2429058 | A | 14-02-2007 |
| | | | | JP | 2007527997 | A | 04-10-2007 |
| | | | | JP | 2012103259 | A | 31-05-2012 |
| | | | | JP | 2016026301 | A | 12-02-2016 |
| | | | | US | 2007165225 | A1 | 19-07-2007 |
| | | | | US | 2008221711 | A1 | 11-09-2008 |
| | | | | WO | 2005091970 | A2 | 06-10-2005 |
| US 2010194574 | A1 | | 05-08-2010 | US | 2010194574 | A1 | 05-08-2010 |
| | | | | WO | 2010088049 | A1 | 05-08-2010 |
| JP 3282458 | B2 | | 13-05-2002 | JP | 3282458 | B2 | 13-05-2002 |
| | | | | JP | H0972842 | A | 18-03-1997 |

EPO FORM P0459

For more details about this annex : see Official Journal of the European Patent Office, No. 12/82